# EUROPÄISCHE PATENTSCHRIFT

(11) **EP 1 922 197 B1**
(45) Veröffentlichungstag und Bekanntmachung des Hinweises auf die Patenterteilung: **13.07.2011**
(21) Anmeldenummer: 06777039.6
(22) Anmeldetag: 23.08.2006
(51) Int. Cl.: B29C 43/52, B29C 70/46, B29C 43/18, B29C 70/68

(54) **PRESSVORRICHTUNG ZUR ENERGIEEFFIZIENTEN AUSHÄRTUNG EINES SANDWICHBAUTEILS FÜR LUFTFAHRZEUGE**
PRESS DEVICE FOR THE ENERGY-EFFICIENT CURING OF A SANDWICH COMPONENT FOR AIRCRAFT
DISPOSITIF DE COMPRESSION DESTINE AU DURCISSAGE A HAUT RENDEMENT ENERGETIQUE D'UN COMPOSANT SANDWICH D'UN AERONEF

(30) Priorität: 23.08.2005 DE 102005039844; 07.07.2006 DE 102006031435
(43) Veröffentlichungstag der Anmeldung: 21.05.2008
(73) Patentinhaber: Airbus Operations GmbH, 21129 Hamburg (DE)
(72) Erfinder: BUSCH, Heinz-Peter, 28844 Weyhe (DE); BONK, Stephan, 28199 Bremen (DE)
(74) Vertreter: Kopf, Korbinian Paul
(86) Internationale Anmeldenummer: PCT/EP2006/008288
(87) Internationale Veröffentlichungsnummer: WO 2007/022970

(56) Entgegenhaltungen:
- EP-A2- 0 389 978
- US-A- 4 456 448
- US-A- 4 609 519
- US-A- 5 271 879
- DATABASE WPI Week 198015 Derwent Publications Ltd., London, GB; AN 1980-26328C XP002408010 & JP 55 028813 A (KAWANISHI KOGYO KK) 29. Februar 1980 (1980-02-29)

## Beschreibung

Die Erfindung betrifft eine Pressvorrichtung zur energieeffizienten Aushärtung eines Sandwichbauteils für Luftfahrzeuge mit einer offenen und mechanisch hinreichend belastbaren Kernstruktur mit einseitig oder beidseitig aufgebrachten Deckschichten, wobei das Sandwichbauteil zwischen einem Druckstempel, einem Widerlager und Seitenwänden der Pressvorrichtung unter Bildung eines im Wesentlichen geschlossenen Innenraums eingespannt ist und zumindest eine Deckschicht und/oder die Kernstruktur mit einem aushärtbaren duroplastischen Kunststoffmaterial gebildet ist. Eine solche Pressvorrichtung ist aus der US-A-5271879 bekannt.

Sandwichbauteile für Passagierkabinen von Luftfahrzeugen werden heutzutage in der Regel mit Phenolharzen hergestellt. Ein wesentlicher Vorteil der Phenolharze im Vergleich zu anderen aushärtbaren Harzsystemen liegt in ihrem günstigen Brandverhalten, das auch die strengen für Passagierkabinen von Luftfahrzeugen vorgeschriebenen Brandnormen erfüllt. Die Phenolharze werden in Autoklaven bei einem Druck von ungefähr 3,5 bar und bei einer Temperatur von 100 °C bis 180 °C ausgehärtet.

Plattenförmige, ebene oder sphärisch gekrümmte Sandwichbauteile, beispielsweise für Innenverkleidungsteile für Passagierkabinen von Luftfahrzeugen, werden beispielsweise mit einer wabenförmigen Kernstruktur aus Aramidpapier ("Nomex"^{®}-Papier) und Phenolharz, die beidseitig mit Deckschichten aus einem so genannten "Prepreg"-Material aus Phenolharz versehen ist, gebildet. Bei dem "Prepreg"-Material handelt es sich um mit einem Phenolharz vorimprägnierte Verstärkungsfasern, Verstärkungsmatten oder Verstärkungsgelege. Das Sandwichbauteil wird in einem Autoklaven unter Überdruck und bei erhöhter Temperatur ausgehärtet. Hierbei erfolgt eine intensive Anbindung der Deckschichten an die Kernstruktur, so dass sich hohe mechanische Festigkeitswerte des fertigen Sandwichbauteils ergeben, da die Deckschichten primär mit Zug- und Druckkräften belastet werden, während die Kernstruktur im Wesentlichen die Aufgabe eines Abstandhalters zwischen den Deckschichten erfüllt.

Die Aushärtung in einem Autoklaven erfordert einen relativ hohen Energieeinsatz zur Aushärtung des Sandwichbauteils. Darüber hinaus stellt ein Autoklav, was insbesondere bei großformatigen Sandwichbauteilen von Bedeutung ist, eine schwere und zugleich massive Vorrichtung dar.

Aufgabe der Erfindung ist es, eine Pressvorrichtung zur Aushärtung von Sandwichbauteilen zu schaffen, die im Vergleich zur Aushärtung im Autoklaven einen geringeren Energieeinsatz erfordert.

Diese Aufgabe wird mit einer Pressvorrichtung, die die nachfolgenden kennzeichnenden Merkmale des Patentanspruchs 1 aufweist, gelöst:
- eine Fördereinrichtung, mit der Heizluft durch mindestens einen Einlass in einer ersten Seitenwand der Pressvorrichtung mit einem definierten Aushärtungsdruck p_{Aushärtung} durch die Kernstruktur des Sandwichbauteils hindurch zu mindestens einem Auslass in einer zweiten Seitenwand der Pressvorrichtung leitbar ist,
- eine außerhalb der Pressvorrichtung angeordnete Heizeinrichtung, mit der die Heizluft temperierbar ist, sodass sich im Bereich der Kernstruktur eine definierte Aushärtungstemperatur T_{Aushänung} einstellt,
- zwei zumindest bereichsweise auf dem Druckstempel und dem Widerlager angeordnete thermische Isolierschichten, und
- zwei zumindest bereichsweise auf den thermischen Isolierschichten angeordnete Druckbleche.

Die erfindungsgemäße Ausgestaltung der Pressvorrichtung ermöglicht infolge der die Kernstruktur durchströmenden Heizluft eine unmittelbare Beheizung des Sandwichbauteils von Innen heraus, so dass sich die Pressvorrichtung, insbesondere bei der Aushärtung von großflächigen Sandwichbauteilen, unter einem verhältnismäßig geringen Energieeinsatz, beispielsweise im Vergleich zu einer konventionellen Aushärtung in einem Autoklaven, betreiben lässt.

Eine Ausgestaltung der erfindungsgemäßen Pressvorrichtung sieht vor, dass diese einen in sich geschlossenen Kreislauf aufweist, derart, dass der mindestens eine Einlass und der mindestens eine Auslass über ein Rohrleitungssystem unter Einbeziehung der Fördereinrichtung und der Heizeinrichtung miteinander verbunden sind. Diese Ausgestaltung ermöglicht aufgrund der nahezu vollständigen Rückführung der Heizluft in einem in sich geschlossenen Kreislauf einen energieeffizienten Betrieb der Pressvorrichtung.

Eine weitere vorteilhafte Ausgestaltung sieht vor, dass die Pressvorrichtung einen offenen Heizluftkreislauf aufweist, derart, dass im Bereich des mindestens einen Auslasses ein Druckregler angeordnet ist, der ein kontrolliertes Entweichen der Heizluft in die Umgebung oder in einen Wärmetauscher unter Beibehaltung eines im Wesentlichen konstanten Aushärtungsdrucks p_{Aushärtung} ermöglicht, und die Fördereinrichtung die Heizluft aus der Umgebung ansaugt.

Diese Ausgestaltung ermöglicht eine technisch weniger aufwändige Temperierung der Heizluft, wobei sich allerdings der Energieeinsatz ohne eine Wärmerückgewinnung signifikant erhöht.

Nach Maßgabe einer weiteren Ausgestaltung ist vorgesehen, dass mittels des Wärmetauschers der Heizluft im Bereich des mindestens einen Auslasses die Restwärme entziehbar ist und diese Restwärme der von der Fördereinrichtung aus der Umgebung angesaugten Heizluft zuführbar ist.

Diese Ausgestaltung ermöglicht einen energieeffizienteren Betrieb im Vergleich zu einem offenen System ohne eine Wärmerückgewinnung mittels eines Wärmetauschers.

In Gemäßheit einer weiteren Ausgestaltung ist vorgesehen, dass zwischen jeweils mindestens einem Druckblech und einer Isolierschicht zumindest bereichsweise ein Flächenheizelement angeordnet ist.

Hierdurch können die Deckschichten erforderlichenfalls von Außen zusätzlich beheizt werden, beispielsweise um den Aushärtungsprozess zu beschleunigen bzw. weiter zu vergleichmäßigen.

Eine weitere vorteilhafte Ausgestaltung sieht vor, dass der Druckstempel und/oder das Widerlager eine von einer ebenen Gestalt abweichende Oberflächengeometrie aufweisen.

Hierdurch wird die Fertigung von Sandwichbauteilen ermöglicht, die eine in maximal zwei Raumdimensionen gekrümmte Oberflächengeometrie aufweisen.

In diesem Fall können zusätzlich Seitenwände der Pressvorrichtung abweichend von der in der Zeichnung dargestellten senkrechten Anordnung gegenüber der Senkrechten geneigt angeordnet und/oder eine von der ebenen Gestalt abweichende Oberflächengeometrie aufweisen. In dieser Variante sind die Seitenwände dann als "Teil" des Druckstempels bzw. des Widerlagers der Pressvorrichtung anzusehen (zweiteilige Form). Der Druckstempel bildet in diesem Fall die obere Formhälfte, während das Widerlager die untere Formhälfte darstellt. Um Hinterschneidungen zu vermeiden kann es in diesen Konstellationen erforderlich sein, zusätzliche Teilungen im Bereich des Druckstempels und/oder des Widerlagers vorzunehmen.

Zwei jeweils gegenüberliegende Seitenwände sollten jedoch möglichst in jeder der vorstehend exemplarisch aufgezeigten Konstellationen zumindest ihre ebene Gestalt und senkrechte Ausrichtung beibehalten, um die Heizluft mittels des jeweils mindestens einen Ein- und Auslasses problemlos durch die Kernstruktur des Sandwichbauteils hindurch leiten zu können.

In den übrigen Unteransprüchen sind weitere vorteilhafte Ausgestaltungen der Erfindung niedergelegt.

In der Zeichnung zeigt:
- Fig. 1: eine schematische Querschnittsdarstellung durch die Pressvorrichtung in einer ersten Ausführungsvariante, und
- Fig. 2: eine schematische Querschnittsdarstellung durch die Pressvorrichtung in einer zweiten Ausführungsvariante.

In den Figuren weisen gleiche konstruktive Elemente jeweils dieselbe Bezugsziffer auf.

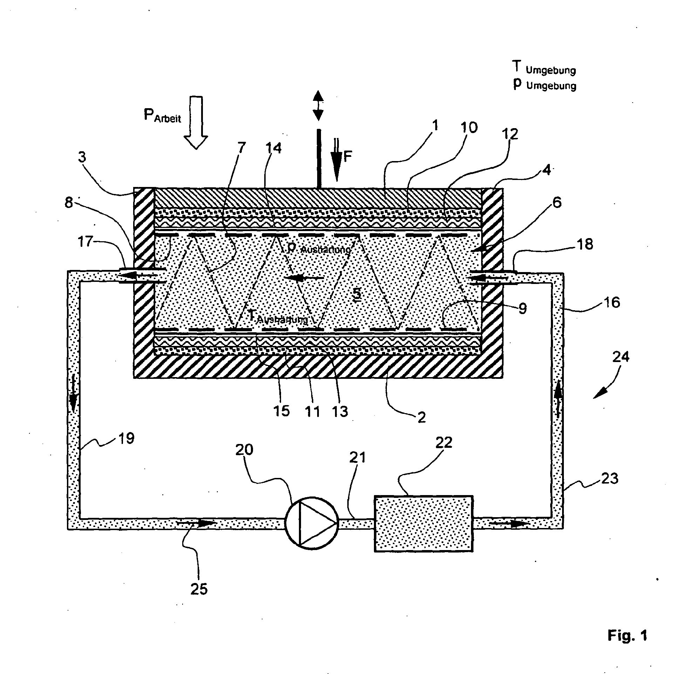

Die Fig. 1 zeigt die Pressvorrichtung mit einem darin befindlichen Sandwichbauteil in einer ersten Ausführungsvariante mit einem geschlossenen Kreislauf.

Die Pressvorrichtung umfasst unter anderem einen Druckstempel 1, ein Widerlager 2 sowie eine erste und zweite Seitenwand 3,4. Stirnseitig sowie auf der Rückseite der Pressvorrichtung sind weitere zwei, hier nicht darstellbare, Seitenflächen vorgesehen. Der in vertikaler Richtung auf- und abbewegbare Druckstempel 1 ist gegenüber allen vier Seitenwänden abgedichtet und bildet zusammen mit dem Widerlager 2 einen weitgehend in sich abgeschlossenen, nahezu gasdichten Innenraum 5.

Im Innenraum 5 der Pressvorrichtung befindet sich ein Sandwichbauteil 6, das im gezeigten Ausführungsbeispiel plattenförmig ausgebildet ist.

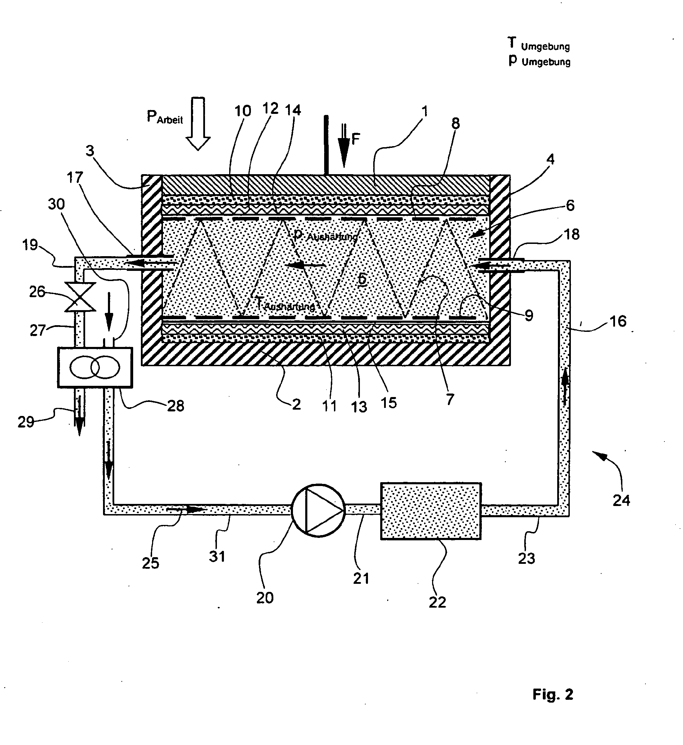

Der Druckstempel 1 sowie das Widerlager 2 können eine gekrümmte Querschnittsgeometrie aufweisen, um Sandwichbauteile 6 mit einer entsprechend gekrümmten Oberflächengeometrie zu fertigen. Die Oberflächenkrümmung kann in bis zu zwei Raumrichtungen ausgebildet sein. Die erste und die zweite Seitenwand 3,4 bilden in diesem Fall zusammen mit dem Druckstempel 1 bzw. dem Widerlager 2 im geschlossenen Zustand (zusammengefahrener Zustand der Pressvorrichtung) ein Formwerkzeug mit einer unteren und einer oberen Formhälfte. Bei dieser Ausführungsvariante wird die Heizluft 16 - im Gegensatz zu der Prinzipdarstellung der Fig. 1 und 2 - senkrecht zur Zeichenebene durch die Kernstruktur 7 durch die in der Fig. 1 nicht dargestellten Seitenwände geleitet. Um Hinterschneidungen zu vermeiden, kann es bei einem Druckstempel 1 und/oder einem Widerlager 2 mit einer gekrümmter Oberflächengeometrie erforderlich sein, zusätzliche Teilungen vorzusehen.

Das Sandwichbauteil 6 weist eine Kernstruktur 7 auf, die auf ihrer Oberseite und ihrer Unterseite jeweils mit einer Deckschicht 8,9 bedeckt ist. Zumindest die Deckschichten 8,9 sind mit einem aushärtbaren und gegebenenfalls faserverstärkten duroplastischen Kunststoffmaterial, insbesondere einem Phenolharz, einem Melaminharz, einem Polyesterharz, einem Epoxydharz oder dergleichen gebildet. Die Kernstruktur 7 kann beispielsweise mit "Nomex^{®}"-Papier oder anderen duroplastischen und/oder thermoplastischen Materialien, die gegebenenfalls mit einer Faserarmierung versehen sind, gebildet sein. Alternativ kann die Kernstruktur 7 auch mit Metallfolien, mit Metallschäumen, mit Kunststoffschäumen, mit Noppenstrukturen, mit gelochten Honigwaben oder dergleichen gebildet sein. Entscheidend ist, dass die Kernstruktur 7 zum einen in mechanischer Hinsicht ausreichend belastbar ist, so dass sie während des Aushärtungsprozesses in der Pressvorrichtung keine Deformation erfährt und dass die Kernstruktur 7 zum anderen offen, das heißt drainagefähig ausgebildet ist, um ein möglichst ungehindertes Durchströmen der Heizluft während des Aushärtungsprozesses zu ermöglichen. Die Kernstruktur 7 kann beispielsweise als eine bekannte offene Faltwabenkernstruktur oder mit geschlitzten Honigwaben gebildet sein. Alternative Gestaltungsformen der Kernstruktur 7, wie zum Beispiel gelochte oder perforierte Honigwaben, dreidimensionale Gewirke aus fadenförmigen Elementen oder dergleichen, sind bei einer hinreichenden mechanischen Belastbarkeit gleichfalls denkbar.

Auf dem Druckstempel 1 ist weiterhin eine thermische Isolierschicht 10 bevorzugt vollflächig angeordnet. Entsprechend ist das Widerlager 2 ebenfalls mit einer bevorzugt vollflächig ausgebildeten Isolierschicht 11 versehen. Die thermischen Isolierschichten 10,11 dienen dazu, den Wärmeverlust aus dem Innenraum 5 in Richtung des Widerlagers 2 sowie des Druckstempels 1 zu minimieren. Auf den thermischen Isolierschichten 10,11 sind die Flächenheizelemente 12,13 gleichfalls bevorzugt vollflächig angeordnet. Die Flächenheizelemente 12,13 können beispielsweise mit elektrisch beheizbaren Heizfolien, Widerstandsfolien oder dergleichen gebildet sein. Auf den Flächenheizelementen 12,13 sind abschließend in an sich bekannter Weise bevorzugt vollflächig Druckbleche 14,15 zur Vergleichmäßigung der Kraftwirkung der Pressvorrichtung angeordnet. Alternativ ist es möglich, die Flächenheizelemente 12,13 nicht oder nur zumindest bereichsweise zwischen den Druckblechen 14,15 , sowie den thermischen Isolierschichten 10,11 anzuordnen. Die Flächenheizelemente 12,13 dienen zur gegebenenfalls erforderlichen Erhöhung der Heizleistung, falls eine Erwärmung der Kernstruktur 7 allein mittels der Heizluft 16 nicht ausreichend sein sollte.

In der ersten Seitenwand 3 befindet sich ein Auslass 17 und in der zweiten Seitenwand 4 ist ein Einlass 18 angeordnet. Anstelle des einzelnen Einlasses 17 und des einzelnen Auslasses 18 können eine Vielzahl von Durchtrittsöffnungen, Düsen, Verteilern, Krümmern oder dergleichen in den Seitenwänden 3,4 angeordnet sein, um eine möglichst gleichmäßige Durchströmung der Kernstruktur 7 bei einem geringem Strömungswiderstand zu erreichen. Der Auslass 17 ist über eine Rohrleitung 19 mit der Fördereinrichtung 20 verbunden. Bei der Fördereinrichtung 20 kann es sich beispielsweise um einen Kompressor, einen Verdichter, ein Gebläse oder dergleichen handeln. Ausgehend von der Fördereinrichtung 20 gelangt die Heizluft 16 über eine weitere Rohrleitung 21 zu der Heizeinrichtung 22. Die Heizeinrichtung 22 zum Temperieren der Heizluft 16 kann zum Erwärmen der durchströmenden Heizluft 16 beispielsweise elektrische Heizwendeln oder dergleichen aufweisen. Zusätzlich kann die Heizeinrichtung 22 auch eine Kühleinrichtung zur definierten Abkühlung der Heizluft 16 aufweisen. Ausgehend von der Heizeinrichtung 22 gelangt die temperierte Heizluft 16 über eine weitere Rohrleitung 23 zurück zum Einlass 18. Die Rohrleitungen 19,21 und 23 bilden zusammen das Rohrleitungssystem 24 der Pressvorrichtung. Die Heizluft 16 wird hierbei mittels der Fördereinrichtung 20 stets in Richtung der schwarzen Richtungspfeile, von denen der besseren zeichnerischen Übersichtlichkeit halber nur ein Richtungspfeil 25 mit einer Bezugsziffer versehen wurde, in einem geschlossenen Kreislauf umgewälzt.

Bei der in der Fig. 1 schematisiert dargestellten Pressvorrichtung wird die Heizluft 16 kontinuierlich durch die Kernstruktur 7 hindurch umgewälzt, so dass sich ein energieeffizienter Betrieb einstellt. Der Druckstempel 1 wird mit einer definierten Kraft F gegen das Widerlager 2 und auf das Sandwichbauteil 6 gepresst, um einen definierten Arbeitsdruck p_{Arbeit} zu erzeugen. Die Erzeugung der Kraft F und damit des Arbeitsdrucks p_{Arbeit} im Innenraum 5 kann beispielsweise in bekannter Weise durch elektrohydraulische Antriebssysteme (Hydraulikkolben) oder elektromechanische Antriebssysteme (Spindelantriebe) erfolgen, die wiederum von einer nicht näher dargestellten Steuer- und Regeleinrichtung kontrolliert werden. Bevorzugt erfolgt die Erzeugung der Kraft F durch mehrere Hydraulikzylinder, die von einer nicht näher dargestellten Steuer- und Regeleinrichtung kontrolliert werden.

Im Innenraum 5 der Pressvorrichtung herrscht ein unter anderem auf den Arbeitsdruck p_{Arbeit} abgestimmter Aushärtungsdruck p_{Aushärtung} bei einer gleichfalls festgelegten Aushärtungstemperatur T_{Aushägung} Der Arbeitsdruck p_{Arteit} lässt sich durch die Kraft F variieren, während der Aushärtungsdruck p_{Aushärtung} im Wesentlichen mittels der Fördereinrichtung 20 und die Aushärtungstemperatur T_{Aushärtung} im Wesentlichen durch die Heizeinrichtung 22 kontrollierbar ist. Sowohl die Fördereinrichtung 20 als auch die Heizeinrichtung 22 werden von der Steuer- und Regeleinrichtung kontrolliert. Bei der Steuerung der Fördereinrichtung 20 und der Heizeinrichtung 22 werden insbesondere die Abhängigkeiten von Druck und Temperatur der Heizluft 16 berücksichtigt, um eine möglichst exakt definierte Aushärtungstemperatur T_{Aushärtung} bei einem vorgewählten Aushärtungsdruck p_{Aushärtung} sicher zu stellen.

In der gezeigten ersten Ausführungsvariante der Pressvorrichtung mit dem vollständig geschlossenen Heizluftkreislauf ist es darüber hinaus möglich, die Strömungsrichtung der Heizluft 16 periodisch umzukehren, um eine gleichmäßigere Temperierung des Innenraums 5 und damit der Kernstruktur 7 des Sandwichbauteils 6 zu erreichen.

Die Fig. 2 illustriert den grundsätzlichen Aufbau der Pressvorrichtung in einer zweiten Ausführungsvariante mit einem offenen Heizluftkreislauf.

Die Pressvorrichtung nach Maßgabe der zweiten Ausführungsvariante weist wiederum den Druckstempel 1, das Widerlager 2 sowie die beiden Seitenwände 3,4 zur Bildung des hermetisch abgeschlossenen Innenraums 5 auf. Im Innenraum 5 der Pressvorrichtung ist das mit den Deckschichten 8,9 sowie der Kernstruktur 7 gebildete Sandwichbauteil 6 angeordnet. Sowohl der Druckstempel 1 als auch das Widerlager 2 sind in Entsprechung zur ersten Ausführungsvariante der Pressvorrichtung gleichfalls mit den thermischen Isolierschichten 10,11, den Flächenheizelementen 12,13 sowie den Druckblechen 14,15 in bevorzugt vollflächiger Ausbildung versehen.

In der ersten und zweiten Seitenwand 3,4 sind wiederum die Ein- und Auslässe 17,18 zur Durchleitung des Heizgases 16 durch das Sandwichbauteil 6 angeordnet. Außerhalb der Pressvorrichtung herrscht die normale Umgebungstemperatur T_{Umgebung} von beispielsweise 21° und der Umgebungsluftdruck p_{Umgebung} von zum Beispiel 1013 hPa. Der Druckstempel 1- wird mittels einer nicht näher dargestellten Hydraulik mit der Kraft F auf das Sandwichbauteil 6 und damit das Widerlager 2 gepresst, um den erforderlichen Arbeitsdruck P_{Arbeit} außerhalb des Sandwichbauteils 6 zu erzeugen.

Der Auslass 17 ist über die Rohrleitung 19 mit einem Druckregler 26 verbunden, von dem aus eine Rohrleitung 27 zu einem Wärmetauscher 28 führt. Der Druckregler 26 gewährleistet einen Austritt der Heizluft 16 aus dem Auslass 17 in Richtung des Wärmetauschers 28 mit einem definierten Volumenstrom und vermeidet damit größere Druckschwankungen des Aushärtungsdrucks p_{Aushärtung} im Innenraum 5 der Pressvorrichtung. Im Idealfall kann der Aushärtungsdruck P_{Aushärtung} mittels des Druckreglers 26 über die gesamte Aushärtungsdauer des Sandwichbauteils 6 hinweg nahezu konstant gehalten werden. Der Druckregler 26 ist vorzugsweise mittels der Steuer- und Regeleinrichtung kontrollierbar ausgebildet, um beispielsweise den Volumenstrom der austretenden Heizluft 16 variabel zu gestalten. Als Druckregler 26 kann beispielsweise ein kontinuierlich steuerbares Magnetventil (elektrisch ansteuerbares Proportional- oder Servoventil) oder ein herkömmlicher Druckminderer eingesetzt werden.

Die im Wärmetauscher 28 abgekühlte Heizluft 16 wird nach dem Durchströmen des Wärmetauschers 28 über eine weitere Rohrleitung 29 nach Außen abgeleitet. Über eine Rohrleitung 30 gelangt die zunächst kühlere Außenluft in den Wärmetauscher 28, wird dort mittels der Wärme, die der Abluft aus dem Innenraum 5 vorab entzogen wurde, zumindest vorgewärmt, über eine weitere Rohrleitung 31 von der Fördereinrichtung 20 angesaugt und in der Heizeinrichtung 22 auf eine - für das jeweilige für das Sandwichbauteil 6 eingesetzte Harzsystem - optimale Aushärtungstemperatur T_{Aushärtung} bei einem entsprechenden Aushärtungsdruck P_{Aushärtung} gebracht.

Der Wärmetauscher 28 ermöglicht ungeachtet des in der zweiten Ausführungsvariante der Pressvorrichtung offenen Heizluftsystems einen energieeffizienten Betrieb, da der Heizluft, die aus dem Auslass 17 über den Druckregler 26 in die Umgebung abgeleitet wird, ein Höchstmaß an Wärmeenergie entzogen wird, die wiederum der aus der Umgebung angesaugten, zunächst noch kühleren Heizluft 16 zu deren Vorwärmung zugeführt wird. Nachdem die temperierte Heizluft 16 die Heizeinrichtung 22 passiert hat, gelangt sie über die Rohrleitung 23 zum Einlass 18 und von dort aus in die Kernstruktur 7 des Sandwichbauteils 6.

Zur Aushärtung des Sandwichbauteils 6 wird der Druckstempel 1 soweit heruntergefahren, bis dieser mit der Kraft F auf das Sandwichbauteil 6 drückt und im Innenraum 5 der Arbeitsdruck P_{Arbeit} herrscht. Der Arbeitsdruck P_{Arbeit} beträgt hierbei höchstens 15 bar, um eine mechanische Beschädigung des Sandwichbauteils 6, insbesondere der Kernstruktur 7, zu vermeiden.

Im Innenraum 5 sollte bei einem beispielsweise mit Polykondensatharzen gebildeten Sandwichbauteil 6 vorzugsweise eine Aushärtungstemperatur T_{Aushärtung} von 135 °C herrschen, die mit der Heizeinrichtung 22 im Wesentlichen konstant gehalten wird. Während der gesamten Dauer des Aushärtungsprozesses karin in vorteilhafterweise durch eine Anpassung des Aushärtungsdrucks p_{Aushärtung} mittels der Fördereinrichtung 20 sichergestellt werden, dass der Aushärtungsdruck p_{Aushärtung} im Bereich der Kernstruktur 7 des Sandwichbauteils 6 stets einen derartigen Wert aufweist, dass während der Aushärtung des Polykondensatharzes bei der jeweils aktuell herrschenden Temperatur T_{Aushärtung} im Innenraum 5 möglichst kein Wasser in die dampfförmige Phase übergeht. Bei einer in diesem Anwendungsfall der Pressvorrichtung optimalen Aushärtungstemperatur T_{Aushärtung} von ungefähr 135 °C ist beispielsweise ein Aushärtungsdruck p_{Aushärtung} von mehr als 3,128 bar einzuhalten. Die Aushärtungsdauer des Sandwichbauteils 6 beträgt in der Regel bis zu 2 Stunden bei einem Aushärtungsdruck P_{Aushärtung} von mehr als 3,128 bar und einer Aushärtungstemperatur von etwa 135 °C.

Die vorstehend geschilderte Ablaufsteuerung der Pressvorrichtung, die in vollem Umfang von der Steuer- und Regeleinrichtung vollautomatisch kontrolliert wird, ist bei allen Sandwichbauteilen mit einer drainagefähigen Kernstruktur, bei denen zumindest eine Deckschicht und/oder zumindest die Kernstruktur mit einem Polykondensationsharzsystem, beispielsweise in der Form eines Phenolharzes, einem Melaminharz oder dergleichen, gebildet ist, zur Wasserdampfunterdrückung und den hiermit verbundenen negativen Begleiterscheinungen, insbesondere in Form der Bläschen- und.Lunkerbildung in der Harzmatrix, von Vorteil.

Sandwichbauteile, deren Deckschichten und/oder Kernstrukturen mit anderen aushärtbaren, duroplastischen Kunststoffmaterialien gebildet sind, insbesondere mit Epoxydharz, Polyesterharz, Bismaleimide-Harz oder dergleichen, können unter Anpassung an die für die jeweiligen Harzsysteme erforderlichen Aushärtungsparameter (T_{Aushärtung}, p_{Aushärtung}) gleichfalls in der Pressvorrichtung auf eine besonders energieeffiziente Art und Weise vollautomatisch ausgehärtet werden.

Grundsätzlich können mittels der Pressvorrichtung auch Sandwichbauteile, bei denen zumindest eine Deckschicht mit einem thermoplastischen Kunststoffmaterial gebildet ist, hergestellt werden. In diesem Fall werden die thermoplastischen Deckschichten mittels der entsprechend temperierten Heizluft zur mechanischen Anbindung an die Kernstruktur zumindest bereichsweise angeschmolzen. Die Aushärtungstemperatur T_{Aushärtung} im Innenraum liegt hier im Bereich der Schmelztemperatur des zur Bildung der Deckschichten eingesetzten thermoplastischen Kunststoffmaterials.

Anstatt mit herkömmlicher Luft kann die Pressvorrichtung nach Maßgabe der ersten Ausführungsvariante mit dem geschlossenen Heizluftkreislauf auch mit anderen, bevorzugt inerten Gasen (Edelgasen) als Heizgasen, wie zum Beispiel Stickstoff, Helium, Neon, Argon, Krypton, Xenon oder dergleichen, betrieben werden.

### Bezugszeichenliste

- 1: Druckstempel
- 2: Widerlager
- 3: erste Seitenwand
- 4: zweite Seitenwand
- 5: Innenraum
- 6: Sandwichbauteil
- 7: Kernstruktur
- 8: Deckschicht
- 9: Deckschicht
- 10: thermische Isolierschicht
- 11: thermische Isolierschicht
- 12: Flächenheizelement
- 13: Flächenheizelement
- 14: Druckblech
- 15: Druckblech
- 16: Heizluft
- 17: Auslass
- 18: Einlass
- 19: Rohrleitung
- 20: Fördereinrichtung
- 21: Rohrleitung
- 22: Heizeinrichtung.
- 23: Rohrleitung
- 24: Rohrleitungssystem
- 25: Richtungspfeil
- 26: Druckregler
- 27: Rohrleitung
- 28: Wärmetauscher
- 29: Rohrleitung
- 30: Rohrleitung
- 31: Rohrleitung

## Patentansprüche

1. Pressvorrichtung zur energieeffizienten Aushärtung eines Sandwichbauteils (6) für Luftfahrzeuge mit einer offenen und mechanisch hinreichend belastbaren Kernstruktur (7) mit einseitig oder beidseitig aufgebrachten Deckschichten (8,9), wobei das Sandwichbauteil (6) zwischen einem Druckstempel (1), einem Widerlager (2) und Seitenwänden (3,4) der Pressvorrichtung unter Bildung eines im Wesentlichen geschlossenen Innenraums (5) eingespannt ist und zumindest eine Deckschicht (3,4) und/oder die Kernstruktur (7) mit einem aushärtbaren duroplastischen Kunststoffmaterial gebildet ist, **gekennzeichnet durch**
- eine Fördereinrichtung (20), mit der Heizluft (16) **durch** mindestens einen Einlass (18) in einer ersten Seitenwand (3) der Pressvorrichtung mit einem definierten Aushärtungsdruck p_{Aushärtung} **durch** die Kernstruktur (7) des Sandwichbauteils (6) hindurch zu mindestens einem Auslass (17) in einer zweiten Seitenwand (4) der Pressvorrichtung leitbar ist,
- eine außerhalb der Pressvorrichtung angeordnete Heizeinrichtung (22), mit der die Heizluft (16) temperierbar ist, sodass sich im Bereich der Kernstruktur (7) eine definierte Aushärtungstemperatur T_{Aushärtung} einstellt,
- zwei zumindest bereichsweise jeweils auf dem Druckstempel (1) und dem Widerlager (2) angeordnete thermische Isolierschichten (10,11), und
- zwei zumindest bereichsweise jeweils auf den thermischen Isolierschichten (10,11) angeordnete Druckbleche (14,15).

2. Pressvorrichtung nach Anspruch 1, **dadurch gekennzeichnet, dass** die Pressvorrichtung einen in sich geschlossenen Heizluftkreislauf aufweist, derart, dass der mindestens eine Einlass (18) und der mindestens eine Auslass (17) über ein Rohrleitungssystem (24) unter Einbeziehung der Fördereinrichtung (20) und der Heizeinrichtung (22) miteinander verbunden sind.

3. Pressvorrichtung nach Anspruch 1, **dadurch gekennzeichnet, dass** die Pressvorrichtung einen offenen Heizluftkreislauf aufweist, derart, dass im Bereich des mindestens einen Auslasses (17) ein Druckregler (26) angeordnet ist, der ein kontrolliertes Entweichen der Heizluft (16) in die Umgebung oder in einen Wärmetauscher (28) unter Beibehaltung eines im Wesentlichen konstanten Aushärtungsdrucks P_{Aushärtung} ermöglicht, und die Fördereinrichtung (20) die Heizluft (16) aus der Umgebung ansaugt.

4. Pressvorrichtung nach Anspruch 3, **dadurch gekennzeichnet, dass** mittels des Wärmetauschers (28) der Heizluft (16) im Bereich des mindestens einen Auslasses (17) die Restwärme entziehbar ist und diese Restwärme der von der Fördereinrichtung (20) aus der Umgebung angesaugten Heizluft (16) zuführbar ist.

5. Pressvorrichtung nach einem der Ansprüche 1 bis 4, **dadurch gekennzeichnet, dass** zwischen jeweils mindestens einem Druckblech (14,15) und einer Isolierschicht (10,11) zumindest bereichsweise ein Flächenheizelement angeordnet ist.

6. Pressvorrichtung nach einem der Ansprüche 1 bis 5, **dadurch gekennzeichnet, dass** der Druckstempel (1) und/oder das Widerlager (2) eine von einer ebenen Gestalt abweichende Oberflächengeometrie aufweisen.

7. Pressvorrichtung nach einem der Ansprüche 1 bis 6, **dadurch gekennzeichnet, dass** der Druckstempel (1) mit einer definierten Kraft F zur Erzeugung eines definierten Arbeitsdrucks P_{Arbeit} zur Kompensation des in der Kernstruktur (7) herrschenden Aushärtungsdrucks p_{Aushärtung} gegen das Widerlager (2) drückbar ist.

8. Pressvorrichtung nach einem der Ansprüche 1 bis 7, **dadurch gekennzeichnet, dass** der Aushärtungsdruck P_{Aushärtung} und die Aushärtungstemperatur T_{Aushärtung} mittels einer Steuer- und Regeleinrichtung in Abhängigkeit vom eingesetzten duroplastischen Kunststoffmaterial der mindestens einen Deckschicht (8,9) und/oder der Kernstruktur (7) des Sandwichbauteils (6) einstellbar sind.

9. Pressvorrichtung nach einem der Ansprüche 1 bis 8, **dadurch gekennzeichnet, dass** das Aushärten eines Sandwichbauteils (6) mit mindestens einer mit einem Polykondensationsharz, insbesondere mit einem Phenolharz, Melaminharz oder dergleichen gebildeten Deckschicht (8,9), bevorzugt bei einem Aushärtungsdruck p_{Aushärtung} erfolgt, der zwischen dem Umgebungsluftdruck p_{Umgebung} und einem Arbeitsdruck p_{Arbeit} der Pressvorrichtung liegt, um eine Wasserdampfbildung während des Aushärtungsvorgangs zumindest teilweise zu unterdrücken.

10. Pressvorrichtung nach Anspruch 9, **dadurch gekennzeichnet, dass** die Aushärtung des Sandwichbauteils (6) bei einer Aushärtungstemperatur T_{Aushärtung} zwischen 100°C und 180°C erfolgt.

11. Pressvorrichtung nach Anspruch 9 oder 10, **dadurch gekennzeichnet, dass** das Sandwichbauteil (6) zur Aushärtung mit einer Aushärtungstemperatur Aushärtung von etwa 135 °C und mit einem Aushärtungsdruck p_{Aushärtung} von mehr als 3,128 bar beaufschlagt wird.

12. Pressvorrichtung nach einem der Ansprüche 9 bis 11, **dadurch gekennzeichnet, dass** die Pressvorrichtung einen Arbeitsdruck p_{Arbeit} von höchstens 15 bar aufbaut.

## Claims

1. A press device for the energy-efficient curing of a sandwich component (6) for aircraft, the sandwich component having an open and mechanically adequately loadable core structure (7) with cover layers (8, 9) applied to one side or to both sides, the sandwich component (6) being clamped between a pressure piston (1), an abutment (2) and sidewalls (3, 4) of the press device, thus forming an essentially closed interior space (5), and at least one cover layer (3, 4) and/or the core structure (7) comprise/comprises a curable duroplastic plastic material,
**characterised in**
- a conveying device (20) by which heated air (16) is feedable through at least one inlet (18) in a first sidewall (3) of the press device at a defined curing pressure p _{Curing} through the core structure (7) of the sandwich component (6) to at least one outlet (17) in a second sidewall (4) of the press device;
- a heater (22) arranged outside the press device, by which heater the heated air (16) is temperature-controllable so that in the region of the core structure (7) a defined curing temperature T _{Curing} results;
- two thermal insulating layers (10, 11) which at least in some regions are arranged on the pressure piston (1) and the abutment (2); and
- two pressure sheet plates (14, 15) which at least in some regions are arranged on the thermal insulating layers (10, 11).

2. The press device of claim 1, **characterised in that** the press device comprises a closed heated-air circuit, such that the at least one inlet (18) and the at least one outlet (17) are interconnected by way of a pipeline system (24) including the conveying device (20) and the heater (22).

3. The press device of claim 1, **characterised in that** the press device comprises an open heated-air circuit, such that in the region of the at least one outlet (17) a pressure controller (26) is arranged that makes possible a controlled escape of the heated air (16) into the surroundings or into a heat exchanger (28) while maintaining an essentially constant curing pressure p _{Curing}, and provides for the conveying device (20) to suck the heated air from the surroundings.

4. The press device of claim 3, **characterised in that** the heat exchanger (28) is in the region of the at least one outlet (17), and the residual heat of the heated air is removable by the heat exchanger (28), and this residual heat can be fed to the heated air (16) that is sucked from the surroundings by the conveying device (20).

5. The press device of one of the claims 1 to 4, **characterised in that** at least one sheet-type heating element is arranged, at least in some regions, in each case between at least one pressure sheet plate (14, 15) and an insulating layer (10, 11).

6. The press device of one of the claims 1 to 5, **characterised in that** the surface geometry of the pressure piston (1) and/or the abutment (2) differs from a plane surface geometry.

7. The press device of one of the claims 1 to 6, **characterised in that** the pressure piston (1) is pressable at a defined force F against the abutment (2) in order to generate a defined operating pressure p_{Operating} so as to compensate for the curing pressure p_{Curing} that exists in the core structure (7).

8. The press device of one of the claims 1 to 7, **characterised in that** the curing pressure p_{Curing} and the curing temperature T_{Curing} can be set by a control- and regulating device depending on the duroplastic plastic material used for the at least one cover layer (8, 9) and/or for the core structure (7) of the sandwich component (6).

9. The press device of one of the claims 1 to 8, **characterised in that** a curing of the sandwich component (6) having at least one cover layer (8, 9) comprising a polycondensation resin, in particular a phenolic resin, melamine resin or the like, preferably takes place at a curing pressure p_{Curing} that is between the ambient air pressure p_{Ambient} and an operating pressure p_{Operating} of the press device, in order to at least partially suppress steam formation during the curing process.

10. The press device of claim 9, **characterised in that** the curing of the sandwich component (6) takes place at a curing temperature T_{Curing} of between 100°C and 180°C.

11. The press device of claim 9 or 10, **characterised in that** the sandwich component (6) is subjected to a curing temperature T_{Curing} of approximately 135 °C and to a curing pressure P_{Curing} of more than 3,128 bar for curing.

12. The press device of one of claims 9 to 11, wherein the press device generates an operating pressure P_{Operating} of a maximum of 15 bar.

## Revendications

1. Dispositif de compression destiné au durcissement à haut rendement énergétique d'un élément de construction sandwich (6) pour des aéronefs, comprenant une structure de coeur (7) ouverte et pouvant supporter une sollicitation mécanique suffisante, avec des couches de protection (8, 9) appliquées unilatéralement ou bilatéralement, l'élément de construction sandwich (6) étant fixé entre un piston (1), un contre-appui (2) et des parois latérales (3, 4) du dispositif de compression en formant un espace intérieur (5) essentiellement fermé et au moins une couche de protection (8, 9) et/ou la structure de coeur (7) étant formée d'une matière plastique thermodurcissable, **caractérisé par**
- un dispositif de refoulement (20), par lequel de l'air chaud (16) peut être envoyé par au moins une admission (18) de la première paroi latérale (4) du dispositif de compression, sous une pression de durcissement définie P_{durcissement}, au travers de la structure de coeur (7) de l'élément de construction sandwich (6), en direction d'au moins un échappement (17) de la seconde paroi latérale (3) du dispositif de compression,
- un dispositif de chauffage (22) disposé à l'extérieur du dispositif de compression, qui permet un équilibrage de température de l'air chaud (16), de sorte qu'il se règle dans la zone de la structure de coeur (7) une température de durcissement définie T_{durcissement},
- deux couches d'isolation thermique (10, 11) disposées chacune, au moins par zones, sur le piston (1) et sur le contre-appui (2), et
- deux tôles de compression (14, 15) disposées chacune, au moins par zones, sur les couches d'isolation thermique (10, 11).

2. Dispositif de compression suivant la revendication 1, **caractérisé en ce que** le dispositif de compression présente un circuit d'air chaud fermé, de telle sorte que la au moins une admission (18) et le au moins un échappement (17) sont reliés entre eux par un réseau de tuyauteries (24), en intégrant le dispositif de refoulement (20) et le dispositif de chauffage (22).

3. Dispositif de compression suivant la revendication 1, **caractérisé en ce que** le dispositif de compression présente un circuit d'air chaud ouvert, de telle sorte qu'un régulateur de pression (26) est disposé dans la zone de le au moins un échappement (17), lequel régulateur permet un échappement contrôlé de l'air chaud (16) dans le milieu ambiant ou dans un échangeur de chaleur (28) en maintenant une pression de durcissement P_{durcissement} essentiellement constante, et le dispositif de refoulement (20) aspire l'air chaud (16) depuis le milieu ambiant.

4. Dispositif de compression suivant la revendication 3, **caractérisé en ce que**, au moyen de l'échangeur thermique (28), la chaleur résiduelle peut être extraite de l'air chaud (16) dans la zone de le au moins un échappement (17), et cette chaleur résiduelle peut être envoyée dans l'air chaud (16) aspiré de l'ambiance par le dispositif de refoulement (20).

5. Dispositif de compression suivant l'une des revendications 1 à 4, **caractérisé en ce qu'**un élément chauffant électrique en forme de bande conductrice est disposé, au moins par zones, entre au moins une tôle de compression (14, 15) et une couche d'isolation (10, 11).

6. Dispositif de compression suivant l'une des revendications 1 à 5, **caractérisé en ce que** le piston (1) et/ou le contre-appui (2) présentent une géométrie superficielle différente d'une configuration plane.

7. Dispositif de compression suivant l'une des revendications 1 à 6, **caractérisé en ce que** le piston (1) peut être pressé contre le contre-appui (2) avec une force définie F pour produire une pression de travail définie Pₜᵣₐᵥₐᵢₗ destinée à compenser la pression de durcissement P_{durcissement} régnant dans la structure de coeur (7).

8. Dispositif de compression suivant l'une des revendications 1 à 7, **caractérisé en ce que** la pression de durcissement P_{durcissement} et la température de durcissement T_{durcissement} sont réglables au moyen d'un dispositif de commande et de régulation en fonction de la matière plastique thermodurcissable utilisée de la au moins une couche de protection (8, 9) et/ou de la structure de coeur (7) de l'élément de construction sandwich (6).

9. Dispositif de compression suivant l'une des revendications 1 à 8, **caractérisé en ce que** le durcissement d'un élément de constructiont sandwich (6) s'effectue avec au moins une couche de protection (8, 9), formée d'une résine de poly-condensation, en particulier d'une résine phénolique, d'une résine de mélamine ou analogues, de préférence sous une pression de durcissement P_{durcissement}, qui se situe entre la pression d'air ambiant Pₐᵢᵣ ambiant et une pression de travail Pₜᵣₐᵥₐᵢₗ du dispositif de compression, pour juguler, au moins en partie, une formation de vapeur d'eau pendant l'opération de durcissement.

10. Dispositif de compression suivant la revendication 9, **caractérisé en ce que** le durcissement de l'élément de construction sandwich (6) s'effectue à une température de durcissement T_{durcissement} comprise entre 100°C et 180°C.

11. Dispositif de compression suivant l'une des revendications 9 et 10, **caractérisé en ce que** l'élément de construction sandwich (6) est sollicité pour le durcissement par une température de durcissement T_{durcissement} d'environ 135° C et sous une pression de durcissement P_{durcissement} de plus de 3,128 bars.

12. Dispositif de compression suivant l'une des revendications 9 à 11, **caractérisé en ce que** le dispositif de compression fournit une pression de travail Pₜᵣₐᵥₐᵢₗ d'au maximum 15 bars.
